(19) Europäisches Patentamt
European Patent Office
Office européen des brevets

(11) EP 0 795 592 A1

(12) # EUROPÄISCHE PATENTANMELDUNG

(43) Veröffentlichungstag:
**17.09.1997 Patentblatt 1997/38**

(21) Anmeldenummer: **97104213.0**

(22) Anmeldetag: **13.03.1997**

(51) Int. Cl.$^6$: **C09D 183/06**, D06M 15/657, C04B 41/49, C09D 175/08, C08G 18/61, C08G 18/28

(84) Benannte Vertragsstaaten:
**AT BE CH DE ES FI FR GB IT LI NL SE**

(30) Priorität: **14.03.1996 DE 19610111**

(71) Anmelder: **Wacker-Chemie GmbH**
**81737 München (DE)**

(72) Erfinder:
- **Hager, Rudolf, Dr.**
  **84503 Altötting (DE)**
- **Kolleritsch, Günther**
  **84539 Zangberg (DE)**
- **Knaup, Wolfgang, Dr.**
  **84508 Burgkirchen (DE)**

(74) Vertreter: **Fritz, Helmut, Dr. et al**
**Wacker-Chemie GmbH,**
**Zentralabteilung Patente,**
**Marken und Lizenzen,**
**Hanns-Seidel-Platz 4**
**81737 München (DE)**

(54) **Zusammensetzungen für die Wasser- und Ölabweisende Behandlung saugfähiger Materialien**

(57) Die Zusammensetzungen umfassen die Komponenten (A) siliciumorganische Verbindungen mit Kohlenwasserstoffresten, Hydroxylresten und/oder Alkoxyresten und (B) fluororganische Siloxanverbindungen, die mindestens einen organischen Rest enthalten, der einen Fluoralkylrest aus 4 bis 20 Kohlenstoffatomen aufweist, wobei die Kohlenstoffatome der Fluoralkylreste mit mindestens 90 Mol-% Fluoratomen gesättigt sind.

EP 0 795 592 A1

## Beschreibung

Die Erfindung betrifft Zusammensetzungen aus siliciumorganischen Verbindungen und fluororganischen Siloxanverbindungen für die wasser- und ölabweisende Behandlung saugfähiger Materialien, sowie ein Verfahren zur wasser- und ölabweisenden Behandlung derartiger Materialien.

Schon seit langem werden Alkoxygruppen enthaltende siliciumorganische Verbindungen für die wasserabweisende Imprägnierung von mineralischen Baustoffen eingesetzt.

Fluororganische Verbindungen sind bekannt für ihre ölabweisende Eigenschaften. Sie besitzen zwar zudem auch wasserabweisende Eigenschaften, diese sind aber wesentlich weniger ausgeprägt und weniger langzeitbeständig als die der üblicherweise für Hydrophobierzwecke von Baustoffen verwendeten siliciumorganischen Verbindungen.

Aus diesem Grunde hat es sich als zweckmäßig erwiesen, beide Substanzklassen zu kombinieren. In US-A-4,125,673 ist ein Verfahren zum Öl- und Wasserabweisendmachen von Baustoffen mit solchen Kombinationsprodukten aus siliciumorganischen und fluororganischen Verbindungen beschrieben. Problematisch und die Gesamteigenschaften der Produkte beeinträchtigend bei diesen Zusammensetzungen ist jedoch, daß die ölabweisende Komponente das Penetrieren und damit die Langzeiteffektivität der siliciumorganischen Verbindung herabsetzt, während die siliciumorganische Komponente einer optimalen Filmbildung der ölabweisenden Komponente entgegenwirkt.

Dreidimensionale Netzwerke aus kovalent verknüpften Organosilanen mit Fluorgruppen aufweisenden organischen Verbindungen und deren Einsatz für die wasser- und ölabweisende Behandlung von Baustoffen sind bekannt aus EP-A-561 708. Der Einsatz von Perfluoralkylreste und Polysiloxaneinheiten enthaltenden Urethanen für die hydrophobe und oleophobe Ausrüstung von Textilien ist in US-A-4,873,306 beschrieben. EP-A-477 805 beschreibt eine Kombination von Fluoralkylgruppen enthaltenden Silanen mit fluorierten Olefintelomeren, die zur öl- und wasserabweisenden Behandlung nicht-saugfähiger, glatter Oberflächen verwendet wird.

Die vorstehenden Fluor und Silicium enthaltenden organischen Verbindungen sind aber ebenfalls nicht in ausreichendem Maße sowohl wasserabweisend, als auch ölabweisend.

Aufgabe der vorliegenden Erfindung war es, ausreichend wirksame Zusammensetzungen für die wasser- und ölabweisende Behandlung saugfähiger Materialien, insbesondere saugfähiger mineralischer Baustoffe oder Holz bereitzustellen.

Gegenstand der Erfindung sind Zusammensetzungen, welche die Komponenten

(A) siliciumorganische Verbindungen aus Einheiten der allgemeinen Formel (I)

$$R_a(OR^1)_bSiO_{\frac{4-a-b}{2}} \quad (I),$$

worin

**R** gleiche oder verschiedene einwertige SiC-gebundene Kohlenwasserstoffreste mit 1 bis 20 Kohlenstoffatomen,
**$R^1$** Wasserstoffatome oder gleiche oder verschiedene Alkylreste mit 1 bis 6 Kohlenstoffatomen,
**a** die Werte 0, 1, 2 oder 3 und
**b** die Werte 1, 2, 3 oder 4 bedeuten,

mit der Maßgabe, daß die Summe aus a und b kleiner oder gleich 4 ist, und
(B) fluororganische Siloxanverbindungen aus mindestens einer Einheit der allgemeinen Formel (IIa), mindestens 5 Einheiten der allgemeinen Formel (IIb) und gegebenenfalls Einheiten der allgemeinen Formel (IIc)

$$ER^2_xSiO_{\frac{3-x}{2}} \quad (IIa),$$

$$R^2_ySiO_{\frac{4-y}{2}} \quad (IIb),$$

$$E^1R^2_zSiO_{\frac{3-z}{2}} \quad (IIc),$$

worin

**$R^2$** einen Rest **R**,
**E** einen mindestens einen Fluoralkylrest aus 4 bis 20 Kohlenstoffatomen aufweisenden organischen Rest, der neben Fluoralkylresten noch weitere 3 bis 200 Atome aufweist, die ausgewählt werden aus den Elementen Kohlenstoff, Wasserstoff, Sauerstoff, Stickstoff und Chlor, wobei die Kohlenstoffatome der Fluoralkylreste mit mindestens 90 Mol-% Fluoratomen gesättigt sind,
**$E^1$** einen Rest **E** oder einen organischen Rest, der 3 bis 200 Atome aufweist, die ausgewählt werden aus

den Elementen Kohlenstoff, Wasserstoff, Sauerstoff, Stickstoff und Chlor,

**x und y** jeweils die Werte 0, 1 oder 2 und

**z** jeweils die Werte 0, 1, 2 oder 3 bedeuten,

umfassen.

Die erfindungsgemäßen Zusammensetzungen der Komponenten (A) und (B) bewirken bei saugfähigen Materialien unverminderte Wasserabweisung im Vergleich mit den reinen siliciumorganischen Verbindungen (A). Die ölabweisende Wirkung der reinen fluororganischen Siloxanverbindungen (B) wird durch einen Synergieeffekt der erfindungsgemäßen Zusammensetzungen der Komponenten (A) und (B) noch übertroffen. Komponente (A) verbessert demnach nicht nur die wasserabweisende Wirkung, sondern auch die ölabweisende Wirkung der fluororganischen Siloxanverbindungen (B).

Die siliciumorganischen Verbindungen (A) können Silane sein. Dann hat die Summe aus a und b den Wert 4. Wenn die Summe aus a und b einen Wert hat, der kleiner als 4 ist, sind die siliciumorganischen Verbindungen (A) oligomere Siloxane oder polymere Siloxane.

Beispiele für die Reste **R** sind die $C_1$-$C_{20}$-Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest und Dodecylreste, wie der n-Dodecylrest; Cycloalkylreste, wie Cyclopentyl-, Cyclohexyl-, 4-Ethylcyclohexyl-, Cycloheptylreste, Norbornylreste und Methylcyclohexylreste; Alkenylreste, wie der Vinyl-, Allyl, n-5-Hexenyl-, 4-Vinylcyclohexyl- und der 3-Norbornenylrest; Arylreste, wie der Phenyl-, Biphenylyl-, Naphthyl- und Anthryl- und Phenanthrylrest; Alkarylreste, wie o-, m-, p-Tolylreste, Xylylreste und Ethylphenylreste; Aralkylreste, wie der Benzylrest, der alpha- und der β-Phenylethylrest. Besonders bevorzugt sind die nicht substituierten $C_1$-$C_{12}$-Alkylreste, insbesondere die $C_1$-$C_8$-Alkylreste und der Phenylrest. Insbesondere bevorzugt ist der Methylrest.

Bevorzugt handelt es sich bei Rest $R^1$ um ein Wasserstoffatom und Kohlenwasserstoffreste mit 1 bis 3 Kohlenstoffatomen, besonders bevorzugt sind der Methyl- und Ethylrest.

Beispiele für die siliciumorganischen Verbindungen (A) sind Silane, wie Methyltrimethoxy- und -triethoxysilan, n-Propyltrimethoxy- und -triethoxysilan, iso-Butyltrimethoxy- und -triethoxysilan, n-Octyltrimethoxy- und -triethoxysilan sowie iso-Octyltrimethoxy- und -triethoxysilan.

Weitere Beispiele für die siliciumorganischen Verbindungen (A) sind (Poly)siloxane, wie Methylmethoxy(poly)siloxane, Methylethoxy(poly)siloxane, Dimethyl(poly)siloxane, n-Propylmethoxy(poly)siloxane, n-Propylethoxy(poly)siloxane, iso-Butylmethoxy(poly)siloxane, iso-Butylethoxy(poly)siloxane, n-Octylmethoxy(poly)siloxane und n-Octylethoxy(poly)siloxane, iso-Octylmethoxy(poly)siloxane und iso-Octylethoxy(poly)siloxane, sowie Copolymere dieser Alkoxy(poly)siloxane.

Bevorzugte Beispiele für die siliciumorganischen Verbindungen (A) sind solche, die durch Umsetzung von Methyltrichlorsilan und gegebenenfalls einem $C_1$-$C_{12}$-Alkyltrichlorsilan, oder Phenyltrichlorsilan mit Methanol oder Ethanol in Wasser erhältlich sind, wie die Organopolysiloxane, bei denen a Werte von 0,8 bis 1,2 insbesondere 0,9 bis 1,1, und b Werte von 0,6 bis 1,5 insbesondere 0,7 bis 1,4, bedeuten.

Das Molekulargewicht und der Vernetzungsgrad der siliciumorganischen Verbindungen (A) ist vorzugsweise nach oben hin nur insofern begrenzt, daß die Verbindungen in organischen Lösemitteln noch löslich sind.

Vorzugsweise besitzen die siliciumorganischen Verbindungen (A) eine Viskosität von 2 mPa • s bis 5000 mPa • s, insbesondere 5 mPa • s bis 500 mPa • s, bei 25°C.

Die erfindungsgemäße Zusammensetzung kann als Komponente (A) eine Art siliciumorganische Verbindung aus Einheiten der allgemeinen Formel (I) oder ein Gemisch mehrer Arten derartiger siliciumorganischer Verbindungen enthalten. Komponente (A) ist in der erfindungsgemäßen Zusammensetzung vorzugsweise in Mengen von 50 bis 99 Gew.-%, insbesondere von 70 bis 95 Gew.-%, bezogen auf die Summe der Komponenten (A) und (B) enthalten.

Für die in den fluororganischen Siloxanverbindungen (B) aus Einheiten der allgemeinen Formeln (IIa), (IIb) und (IIc) vorhandenen Reste $\mathbf{R^2}$ sind Beispiele vorstehend bei **R** angegeben.

Vorzugsweise besitzt in mindestens 95% der Einheiten der allgemeinen Formel (IIb) **y** den Wert 2.

Vorzugsweise kommen auf eine Einheit der allgemeinen Formel (IIa) 5 bis 500, insbesondere 10 bis 300, Einheiten der allgemeinen Formel (IIb).

Vorzugsweise kommen auf 10 Einheiten der allgemeinen Formel (IIa) höchstens 10, insbesondere eine Einheit der allgemeinen Formel (IIc).

**E**

ist vorzugsweise ein Rest der allgemeinen Formel

$$X\text{-}Y\text{-}Z\text{-} \qquad (III),$$

in der

X einen Rest der allgemeinen Formel (IV)

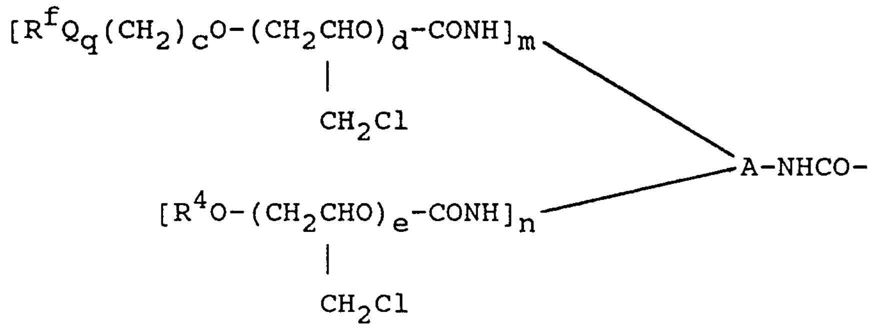

(IV),

bedeutet, in der

**R^f** einen Perfluoralkylrest mit 4 bis 20 Kohlenstoffatomen oder einen ω-H-Perfluoralkylrest mit 4 bis 20 Kohlenstoffatomen,

**Q** ein Rest der allgemeinen Formeln (V) oder (VI)

$$-SO_2NR^3- \quad (V),$$

$$-CH_2CH_2SO_2NR^3- \quad (VI),$$

in denen

**R³** ein Wasserstoffatom oder ein Alkylrest mit 1 bis 4 Kohlenstoffatomen ist,

**R⁴** einen Alkylrest mit 4 bis 20 Kohlenstoffatomen ,

**c** eine ganze Zahl von 1 bis 4,

**d und e** jeweils eine ganze Zahl von 0 bis 10,

**m** den Wert 1 oder 2,

**n** den Wert 0 oder 1, wobei die Summe aus m + n höchstens 2 ist,**q** den Wert 0 oder 1 und

**A** einen Rest entsprechend einer der Formeln (VII) bis (XV)

(VII) 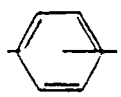

(VIII) 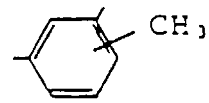

(IX) 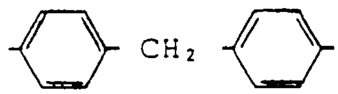

(X) 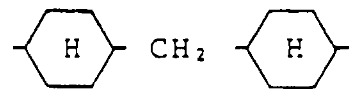

(XI) 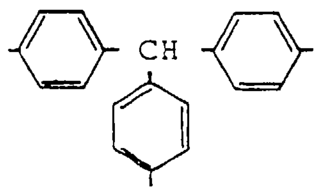

(XII) $-(CH_2)_6-$

(XIII) 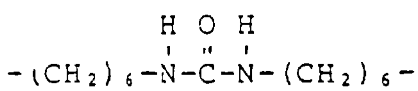

(XIV) 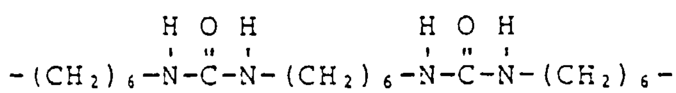

(XV) 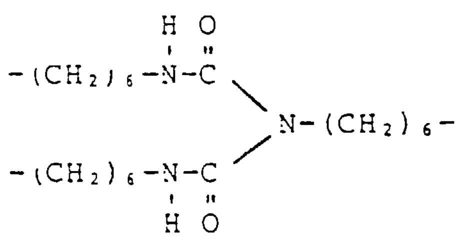

bedeuten,

**Y** ein Sauerstoffatom oder einen Rest der allgemeinen Formel (XVI)

$$-NR^5- \quad (XVI),$$

in der

**$R^5$** ein Alkylrest mit 1 bis 4 Kohlenstoffatomen ist, bedeutet,und

**Z** einen Rest entsprechend einer der allgemeinen Formeln (XVII) bis (XX)

$$-(CH_2)_f- \quad (XVII),$$

$$-(CH_2)_fO(CH_2)g- \quad (XVIII),$$

$$-(CH_2)_hNR^5(CH_2)_i- \quad (XIX),$$

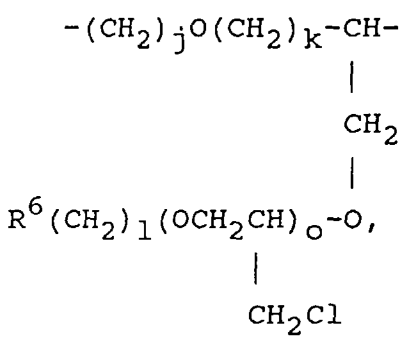

(XX),

bedeutet, in dem

| | |
|---|---|
| **f, g, h, i, j, k, l, und o** | jeweils eine ganze Zahl von 0 bis 10 und |
| $\mathbf{R^6}$ | einen Rest $\mathbf{R^4}$ oder $\mathbf{R^f}$ bedeuten. |
| $\mathbf{E^1}$ | ist vorzugsweise ein Rest der allgemeinen Formel (XI) |

$$X^1\text{-Y-Z-} \qquad \text{(XI)},$$

in der

| | |
|---|---|
| $\mathbf{X^1}$ | die Bedeutungen von **X** hat oder ein Wasserstoffatom bedeutet und |
| **Y** und **Z** | die vorstehenden Bedeutungen aufweisen. |

Vorzugsweise weist der Rest $\mathbf{R^f}$ 6 bis 16 Kohlenstoffatome auf.

Vorzugsweise ist $\mathbf{R^4}$ ein Alkylrest mit 10 bis 18 Kohlenstoffatomen.

Vorzugsweise hat **c** die Werte 1 oder 2. Vorzugsweise haben **d, e, f, g, h, i, j, x, l,** und **o** jeweils die Werte 0, 1, 2, 3, 4 oder 5.

Die erfindungsgemäße Zusammensetzung kann als Komponente (B) eine oder oder ein Gemisch mehrer Arten von fluororganischen Siloxanverbindungen (B) aus Einheiten der allgemeinen Formeln (II) enthalten. Komponente (B) ist in der erfindungsgemäßen Zusammensetzung vorzugsweise in Mengen von 1 bis 50 Gew.-%, insbesondere von 5 bis 30 Gew.-%, bezogen auf die Summe der Komponenten (A) und (B) enthalten.

Vorzugsweise enthält die erfindungsgemäße Zusammensetzung neben den Komponenten (A) und (B) noch (C) organisches Lösemittel. Bei den organischen Lösemitteln handelt es sich bevorzugt um aromatische oder aliphatische Kohlenwasserstoffe wie Toluol, Xylole, Testbenzine und Isoparaffine, Ketone wie Aceton, Methylethylketon und Diethylketon, Ether wie Diisopropylether, Tetrahydrofuran und Dibutylether, Ester wie Ethylacetat und Butylacetat und Alkohole wie Ethanol und Isopropanol. Besonders bevorzugt sind Testbenzine und Isoparaffine sowie Gemische dieser mit Ketonen und/oder Alkoholen und/oder Estern.

Wenn die erfindungsgemäße Zusammensetzung organische Lösemittel enthält, werden vorzugsweise 0,1 bis 99 Gewichtsteile, insbesondere 0,5 bis 98 Gewichtsteile organische Lösemittel pro Gewichtsteil der Summe der Komponenten (A) und (B) eingesetzt.

Die erfindungsgemäße Zusammensetzung kann neben den Komponenten (A), (B) und (C) noch weitere Komponenten enthalten. Enthalten beispielsweise siliciumorganische Verbindungen der Komponente (A) zahlreiche Alkoxygruppen $OR^1$, kann es zweckmäßig sein, als weitere Komponente der erfindungsgemäßen Zusammensetzung einen Kondensationskatalysator zuzusetzen. Beispiele für solche Kondensationskatalysatoren sind Säuren und Basen sowie metallorganische Verbindungen, beispielsweise Dibutylzinnacetat, Dibutylzinnlaurat, Butyltitanat und Zirkontitanat. Die metallorganischen Verbindungen sind besonders bevorzugt.

Die Katalysatormenge beträgt vorzugsweise 0,001 bis 0,1 Gewichtsteile, insbesondere 0,005 bis 0,03 Gewichtsteile, bezogen auf ein Gewichtsteil der Komponente (A).

Die erfindungsgemäßen Zusammensetzungen werden durch einfaches Vermischen der Komponenten (A), (B) und gegebenenfalls weiterer Komponenten in beliebiger Reihenfolge hergestellt. Die erfindungsgemäße Zusammensetzung kann auch als wäßrige Dispersion zubereitet werden. Dazu werden die vorstehend beschriebenen Komponenten (A) und (B) und gegebenenfalls weitere Komponenten in an sich bekannter Weise mit Tensiden in Wasser dispergiert.

Die erfindungsgemäßen Zusammensetzungen werden insbesondere eingesetzt für die wasser- und ölabweisende Behandlung saugfähiger mineralischer Baustoffe oder Holz. Unter Saugfähigkeit ist dabei zu verstehen, daß das betreffende Material in der Lage ist, über den Weg des kapillaren Saugens wenigstens 0,1 % seines Gewichtes an Flüssigkeit aufzunehmen. Beispiele für saugfähige Materialien sind mineralische Baustoffe wie Beton, Ton, Ziegel, keramische Fliesen, Faserzementplatten, Kalksandsteine, Sandsteine, Kalksteine, Marmor, Travertine, Granit sowie nicht-mineralische Baustoffe, insbesondere Holz und cellulosehaltige Materialien.

Das Aufbringen der erfindungsgemäßen Zusammensetzungen kann in beliebiger Weise, wie beispielsweise durch Aufsprühen, Gießen, Streichen, Walzen oder Tauchen, erfolgen. Das Verfahren hat den Vorteil, daß sehr einfach und mit geringem Materialaufwand hervorragende und langzeitbeständige Wasser- und Ölabweisung erzielt wird. Das besondere am erfindungsgemäßen Verfahren ist, daß das kapillare Aufsaugen von Wasser und in Wasser gelösten Schadstoffen sowie Öl und oleophilen Substanzen reduziert bzw. unterbunden wird, ohne daß die Poren und Kapillaren des Substrates verschlossen werden. Die Atmungsfähigkeit des Substrates bleibt also erhalten.

**Beispiele**

Anhand der folgenden Beispiele wird die Erfindung näher erläutert. Alle Angaben von Teilen und Prozentsätzen beziehen sich auf das Gewicht. Die Beispiele werden bei einem Druck der umgebenden Atmosphäre, also etwa bei 1000 hPa, und bei Raumtemperatur, also etwa bei 23 °C, durchgeführt. Die mit den erfindungsgemäßen Zusammensetzungen behandelten Substrate sind vor Verwendung mindestens 28 Tage im Normklima (23 °C/50 % relative Luftfeuchtigkeit) gelagert worden.

Beispiel 1

10 g eines Perfluoralkylreste und Polysiloxan enthaltenden Urethans der Formel

$$XOCH_2CH_2CH_2\text{-}[(CH_3)_2SiO]_{48,5}\text{-}(CH_3)_2Si\text{-}CH_2CH_2CH_2O\text{-}X$$

X =

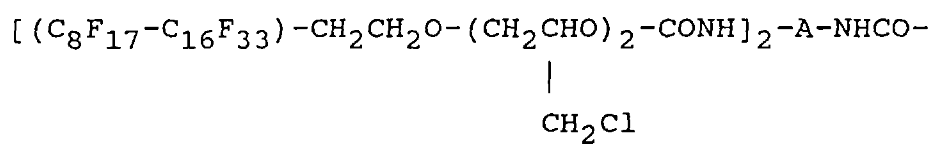

A =

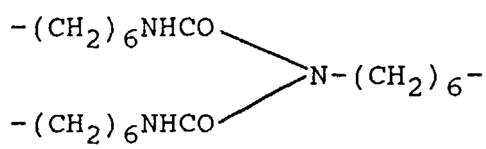

hergestellt nach dem in Beispiel 3 von US-A-4,873,306 beschriebenen Verfahren, werden in einem Gemisch aus 10 g Isopropanol, 25 g Butylacetat und 895 g eines flüssigen Isoparaffins (ISOPAR® H von Deutsche Exxon Chemical GmbH, Köln) gelöst und mit 60 g eines oligomeren Methysiloxans der durchschnittlichen Formel

$$MeSi(OEt)_{0,75}O_{1,125}$$

(Viskosität bei 25 °C ca. 22 mPa • s) sowie 1,2 g Butyltitanat homogen vermischt. Die so erhaltene farblose bis hellgelbe klare Lösung wird unter Feuchtigkeitsausschluß aufbewahrt.

Beispiel 2

Beispiel 1 wird wiederholt, mit der Abänderung, daß die doppelte Menge Isoparaffin verwendet wird.

Beispiel 3

Beispiel 1 wird wiederholt, mit der Abänderung, daß anstelle des oligomeren Methylsiloxans ein copolymeres Methyl/Isooctylsiloxan der durchschnittlichen Formel

$$Me_{0,7}{}^{i}Oct_{0,3}Si(OMe)_{1,3}O_{0,85}$$

(Viskosität bei 25 °C ca. 15 mPa • s) eingesetzt wird.

Beispiel 4

Beispiel 3 wird wiederholt, mit der Abänderung, daß die doppelte Menge Isoparaffin verwendet wird.

Beispiel 5

Auf unglasierte Terra Cotta Platten werden ca. 300 g/m$^2$ der in Tabelle 1 angegebenen Imprägnierungsmittel durch Streichen aufgetragen. Nach 7 Tagen Trocknungszeit bei Raumtemperatur werden Wasser- und Ölabweisung geprüft. Dazu werden auf jede Platte 5 Wassertropfen und 5 Sojaöltropfen (Volumen jeweils ca. 0,2 ml) aufgetragen. Zur Charakterisierung der wasserabweisenden Wirkung wird 30 Minuten nach Auftrag der Randwinkel der Wassertropfen - soweit noch nicht aufgesogen - bestimmt. Für die Charakterisierung der ölabweisenden Wirkung werden die Tropfen nacheinander abgewischt (nach 1 Minute, 1 h, 8 h, 24 h und 72 h) und der zurückbleibende Fleck beurteilt (1 = kein Fleck erkennbar, 2 = leichter Fleck, 3 = deutlicher Fleck, 4 = starker Fleck, 5 = Öltropfen vor Prüfung bereits aufgesogen).

Tabelle 1

| Imprägnierungsmittel | Wasserabweisung (Randwinkel nach 30 Minuten) | Ölabweisung (Fleckbildung) | | | | |
|---|---|---|---|---|---|---|
| | | 1 Minute | 1 h | 8 h | 24 h | 72 h |
| Beispiel 1 | 140 ° | 1 | 1 | 1 | 1 | 1 |
| Beispiel 2 | 140 ° | 1 | 1 | 1 | 1 | 1-2 |
| Beispiel 3 | 140 ° | 1 | 1 | 1 | 1 | 1-2 |
| Beispiel 4 | 140 ° | 1 | 1 | 1 | 1-2 | 2 |
| Vergleichsversuch a * | aufgesogen | 4 | 5 | 5 | 5 | 5 |
| Vergleichsversuch b * | 110 ° | 1 | 1 | 1-2 | 2 | 2-3 |
| Vergleichsversuch c * | 140 ° | 1 | 2 | 2-3 | 3 | 3-4 |

* Vergleichsversuch a: Unbehandelte Terra Cotta Platte

* Vergleichsversuch b: Urethanlösung aus Beispiel 1, jedoch ohne Zusatz der siliciumorganischen Verbindung (A)

* Vergleichsversuch c: Mischung von 40 g einer Lösung eines siliconfreien Fluorpolymeren in Ethylacetat und n-Heptan (Scotchgard® FX 3530 von 3M Deutschland GmbH, Neuss; 25 % Aktivsubstanz) mit 60 g des in Beispiel 1 beschriebenen Methylsiloxans und 890g des in Beispiel 1 beschriebenen Isoparaffins.

Schlußfolgerungen:

Mit den erfindungsgemäßen Zusammensetzungen aus den Beispielen 1 bis 4 wird gute Wasser- und Ölabweisung erzielt. Die Synergie von fluororganischen Siloxanverbindungen (B) und zusätzlicher siliciumorganischer Verbindung (A) wird durch Vergleichsversuch b bestätigt. Komponente (A) verbessert nicht nur die wasserabweisende Wirkung, sondern auch die ölabweisende. Vergleichsversuch c zeigt, daß diese Synergie nur bei den fluororganischen Siloxanverbindungen (B) der erfindungsgemäßen Zusammensetzungen auftritt, während die ölabweisende Wirkung anderer Fluorverbindungen durch Zusatz einer siliciumorganischen Verbindung (A) keinesfalls verbessert, sondern sogar verschlechtert wird.

Beispiel 6

Kalksandsteinwürfel der Kantenlänge 5 cm werden 5 Minuten in die in Tabelle 2 angegebenen Imprägniermittel getaucht (5 cm Flüssigkeitsüberstand). Dabei wird eine Imprägniermittelaufnahme von ca. 500 $g/m^2$ erreicht. Nach 7

Tagen Trocknungszeit werden Wasser- und Ölabweisung wie in Beispiel 5 geprüft. Zusätzlich wird die kapillare Wasseraufnahme durch 24stündiges Tauchen der Prüfkörper in Wasser (5 cm Wasserüberstand) bestimmt.

Tabelle 2

| Imprägnierungsmittel | Wasserabweisung | | Ölabweisung** | | | | |
|---|---|---|---|---|---|---|---|
| | Randwinkel nach 30 Min. | Wasseraufn. nach 24 h Tauchen | 1 Min. | 1 h | 8 h | 24 h | 72 h |
| Beispiel 1 | 140 ° | 1,3 % | 1 | 1 | 1 | 1-2 | 2 |
| Beispiel 2 | 140 ° | 2,8 % | 1 | 1 | 1 | 2 | 2-3 |
| Beispiel 3 | 140 ° | 1,2 % | 1 | 1 | 1-2 | 2 | 2-3 |
| Beispiel 4 | 140 ° | 2,6 % | 1 | 1 | 1-2 | 2 | 2-3 |
| Vergleichsversuch a * | aufgesogen | 12,5 % | 5 | 5 | 5 | 5 | 5 |
| Vergleichsversuch b * | < 90 ° | 11,7 % | 1 | 2 | 2-3 | 3 | 3-4 |
| Vergleichsversuch c * | 140 ° | 1,5 % | 2 | 3 | 4 | 4-5 | 5 |

* Vergleichsversuche a, b, c wie in Beispiel 5
** Beurteilung wie in Beispiel 5

Schlußfolgerungen:

Vergleichsversuch b verdeutlicht noch stärker als in Beispiel 5 die wasserabweisende Wirkung der Komponente (A). Während die oleophobe Komponente (B) nur an der Oberfläche wirkt, geht Komponente (A) in die Tiefe und bildet so eine auch gegen Druckwasser (5 cm Wasserüberstand) resistente hydrophobe Zone aus.
Die erfindungsgemäßen Zusammensetzungen aus den Beispielen 1 bis 4 ergeben deutlich bessere Ölabweisung als die Imprägnierungsmittel bei den Vergleichsversuchen b und c.

Beispiel 7

Aus 2700 g Normensand (von Normensand GmbH, D-59269 Beckum bei Münster), 900 g Weißzement PZ 450Z (von Dyckerhoff Zementwerke AG, D-65203 Wiesbaden) und 450 g Wasser werden schalölfrei durch Verwendung von Kunststoffringen Mörtelscheiben mit einem Durchmesser von 8 cm und einer Höhe von 2 cm hergestellt. Nach 4wöchiger Klimatisierung bei 23 °C/50 % relativer Luftfeuchtigkeit werden je drei Prüfkörper mit den Imprägnierungsmitteln aus den Beispielen 1 und 3 durch 1 Minute Tauchen imprägniert. Nach 7 Tagen Trocknung bei Raumtemperatur werden die so behandelten Proben und 3 unbehandelte Mörtelscheiben für 28 Tage in Wasser gelegt (5 cm Wasserüberstand) und die mittlere Wasseraufnahme (prozentuale Gewichtszunahme) bestimmt. Es zeigt sich, daß die unbehandelten Probekörper ca. 7,5 % Wasser aufnehmen, die mit Imprägniermittel aus Beispiel 1 behandelten ca. 5 % und die mit Imprägniermittel aus Beispiel 3 behandelten ca. 3 %. Die unterschiedliche wasserabweisende Wirkung der Produkte aus den Beispielen 1 und 3 resultiert aus der unterschiedlichen Zusammensetzung ihrer Komponente (A). Mit langkettigen organischen Resten am Siliciumatom (Reste R in der allgemeinen Formel (I)) wird eine höhere Alkalistabilität erreicht. Bei hochalkalischen Substraten wie den hier verwendeten Mörtelscheiben oder Beton, tritt diese Struktur-Wirkungs-Beziehung deutlich zu Tage.

Beispiel 8

Auf einen Granitprobekörper werden ca. 50 $g/m^2$ Imprägniermittel aus Beispiel 2 durch Streichen aufgebracht. Nach 7 Tagen Trocknungszeit werden auf die so behandelte Fläche und auf unbehandelten Granit Wasser und Sojaöl aufgetropft (pro Tropfen jeweils ca. 0,2 ml). Während auf dem unbehandelten Stein die Tropfen innerhalb von Sekunden auseinanderfließen, bleiben sie auf der imprägnierten Oberfläche lange unverändert (Kontaktwinkel nach 1 h: Wasser > 130 °, Öl > 100 °).

## Patentansprüche

1. Zusammensetzungen, welche die Komponenten

   (A) siliciumorganische Verbindungen aus Einheiten der allgemeinen Formel (I)

   $$R_a(OR^1)_bSiO_{\frac{4-a-b}{2}} \qquad (I),$$

   worin

   **R** gleiche oder verschiedene einwertige SiC-gebundene Kohlenwasserstoffreste mit 1 bis 20 Kohlenstoffatomen,
   **$R^1$** Wasserstoffatome oder gleiche oder verschiedene Alkylreste mit 1 bis 6 Kohlenstoffatomen,
   **a** die Werte 0, 1, 2 oder 3 und
   **b** die Werte 1, 2, 3 oder 4 bedeuten,

   mit der Maßgabe, daß die Summe aus a und b kleiner oder gleich 4 ist, und
   (B) fluororganische Siloxanverbindungen aus mindestens einer Einheit der allgemeinen Formel (IIa), mindestens 5 Einheiten der allgemeinen Formel (IIb) und gegebenenfalls Einheiten der allgemeinen Formel (IIc)

   $$ER^2_xSiO_{\frac{3-x}{2}} \qquad (IIa),$$

   $$R^2_ySiO_{\frac{4-y}{2}} \qquad (IIb),$$

   $$E^1R^2_zSiO_{\frac{3-z}{2}} \qquad (IIc),$$

   worin

   **$R^2$** einen Rest **R**,
   **E** einen mindestens einen Fluoralkylrest aus 4 bis 20 Kohlenstoffatomen aufweisenden organischen Rest, der neben Fluoralkylresten noch weitere 3 bis 200 Atome aufweist, die ausgewählt werden aus den Elementen Kohlenstoff, Wasserstoff, Sauerstoff, Stickstoff und Chlor, wobei die Kohlenstoffatome der Fluoralkylreste mit mindestens 90 Mol-% Fluoratomen gesättigt sind,
   **$E^1$** einen Rest **E** oder einen organischen Rest, der 3 bis 200 Atome aufweist, die ausgewählt werden aus den Elementen Kohlenstoff, Wasserstoff Sauerstoff, Stickstoff und Chlor,
   **x und y** jeweils die Werte 0, 1 oder 2 und
   **z** jeweils die Werte 0, 1, 2 oder 3 bedeuten,

   umfassen.

2. Zusammensetzungen nach Anspruch 1, bei denen in der Komponente (A) die Reste **R** nicht substituierte $C_1$-$C_{12}$-Alkylreste bedeuten.

3. Zusammensetzungen nach Anspruch 1 oder 2, bei denen in der Komponente (A) die Reste **$R^1$** Wasserstoffatome oder Kohlenwasserstoffreste mit 1 bis 3 Kohlenstoffatomen bedeuten.

4. Zusammensetzungen nach einem der Ansprüche 1 bis 3, bei denen die siliciumorganischen Verbindungen der Komponente (A) eine Viskosität von 2 mPa • s bis 5000 mPa • s aufweisen.

5. Zusammensetzungen nach einem der Ansprüche 1 bis 4, bei denen die Komponente (A) in Mengen von 50 bis 99 Gew.-%, bezogen auf die Summe der Komponenten (A) und (B) enthalten ist.

6. Zusammensetzungen nach einem der Ansprüche 1 bis 5, bei denen in der Komponente (B) in mindestens 95% der Einheiten der allgemeinen Formel (IIb) **y** den Wert 2 hat.

7. Zusammensetzungen nach einem der Ansprüche 1 bis 6, bei denen in der Komponente (B) auf eine Einheit der allgemeinen Formel (IIa) 5 bis 500 Einheiten der allgemeinen Formel (IIb) kommen.

8. Zusammensetzungen nach einem der Ansprüche 1 bis 7, bei denen die Komponente (B) in Mengen von 1 bis 50

Gew.-%, bezogen auf die Summe der Komponenten (A) und (B) enthalten ist.

**9.** Zusammensetzungen nach einem der Ansprüche 1 bis 8, welche neben den Komponenten (A) und (B) noch (C) organisches Lösemittel enthalten.

**10.** Verfahren zur wasser- und ölabweisenden Behandlung saugfähiger Materialien, bei dem die Zusammensetzungen gemäß einem der Ansprüche 1 bis 9 auf die saugfähigen Materialien aufgebracht werden.

Europäisches Patentamt

# EUROPÄISCHER RECHERCHENBERICHT

Nummer der Anmeldung
EP 97 10 4213

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | EP 0 467 083 A (PFERSEE CHEM FAB) 22.Januar 1992<br>* Seite 5, Zeile 37 - Zeile 47 *<br>--- | 1-10 | C09D183/06<br>D06M15/657<br>C04B41/49<br>C09D175/08<br>C08G18/61<br>C08G18/28 |
| A | EP 0 222 334 A (HOECHST AG) 20.Mai 1987<br>--- | 1-10 | |
| A<br>D | EP 0 298 364 A (HOECHST AG) 11.Januar 1989<br>& US 4 873 306 A<br>--- | 1-10 | |
| A | EP 0 688 842 A (HUELS SILICONE GMBH) 27.Dezember 1995<br>--- | 1-10 | |
| A | EP 0 552 874 A (DOW CORNING) 28.Juli 1993<br>----- | 1-10 | |

RECHERCHIERTE SACHGEBIETE (Int.Cl.6)

C09D
D06M
C04B
B27K
C08G

Der vorliegende Recherchenbericht wurde für alle Patentansprüche erstellt

| Recherchenort | Abschlußdatum der Recherche | Prüfer |
|---|---|---|
| DEN HAAG | 23.Mai 1997 | Andriollo, G |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)